(19) Europäisches Patentamt
European Patent Office
Office européen des brevets

(11) Veröffentlichungsnummer: **0 008 723**
**B1**

(12) # EUROPÄISCHE PATENTSCHRIFT

(45) Veröffentlichungstag der Patentschrift: **28.07.82**

(51) Int. Cl.³: **C 08 L 55/02,** C 08 K 5/54

(21) Anmeldenummer: **79103002.6**

(22) Anmeldetag: **17.08.79**

(54) **Schlagzähe ABS-Formmassen.**

(30) Priorität: **29.08.78 DE 2837597**

(43) Veröffentlichungstag der Anmeldung: **19.03.80 Patentblatt 80/6**

(45) Bekanntmachung des Hinweises auf die Patenterteilung: **28.07.82 Patentblatt 82/30**

(84) Benannte Vertragsstaaten: **BE DE FR GB IT NL**

(56) Entgegenhaltungen:
**DE-A-1 644 777**
**FR-A-2 248 298**
**US-A-3 046 239**

(73) Patentinhaber: **BAYER AG, Zentralbereich Patente, Marken und Lizenzen, D-5090 Leverkusen 1, Bayerwerk (DE)**

(72) Erfinder: **Lindner, Christian, Dr., Riehler Strasse 200, D-5000 Köln 60 (DE)**
Erfinder: **Ott, Karl-Heinz, Dr., Paul-Klee-Strasse 54, D-5090 Leverkusen 1 (DE)**
Erfinder: **Arnold, Bernhard, Erftstrasse 2, D-5024 Pulheim (DE)**
Erfinder: **Kowitz, Friedrich, Dr., Friedrich-Ebert-Strasse 44, D-4047 Dormagen 1 (DE)**
Erfinder: **Oertel, Harald, Dr., Auf dem Heidchen 24, D-5068 Odenthal (DE)**
Erfinder: **Kuhlmann, Dieter, Dr., Reiherweg 31, D-5024 Pulheim (DE)**

**EP 0 008 723 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Schlagzähe ABS-Formmassen

Die Herstellung von ABS-Formmassen erfordert ausser der eigentlichen Polymerisation eine Compoundierung, in der Pfropfkautschuk und Styrol-Acrylnitril (SAN)-Copolymerisat intensiv durchmischt und für die Weiterverarbeitung bzw. den Gebrauch notwendige Additive wie Gleitmittel, Pigmente, Antistatika eingearbeitet werden.

Zur Compoundierung werden meist Innenkneter oder zwei- und vierwellige Schneckenkneter benutzt, an die ein Zweiwalzenstuhl mit Band-Granulator bzw. ein Strang- oder Unterwasser-Granulator angeschlossen ist. Die Art der Vorrichtung richtet sich nach dem ABS-Herstellprozess. Wenn das SAN-Copolymerisat als Lösungspolymerisat vorliegt, verwendet man bevorzugt Schneckenkneter. Polymerisiert man in Emulsion, so wird das resultierende Pulver oftmals in einem Innenkneter weiterverarbeitet.

Im allgemeinen setzt man den Formmassen ca. 1–3 Gew.% eines Gleitmittels als Verarbeitungshilfe zu, um ihr Fliessverhalten zu verbessern und um innere Spannungen in den daraus hergestellten Formteilen zu vermindern.

Für ABS-Formmassen geeignete Gleitmittel sind u.a. Alkali-und Erdalkali-Salze von Fettsäuren; Fettsäureester von ein- und mehrwertigen Alkoholen und Amide langkettiger Fettsäuren und Sulfonsäuren.

Der Erfindung liegt die Erkenntnis zugrunde, dass durch Zusatz geringer Mengen von «Silikourethanderivaten», die durch Umsetzung von Polydialkylsiloxan-, Polyarylalkylsiloxan- bzw. Polydiarylsiloxanderivaten mit Polyisocyanaten erhalten werden, die Schlagzähigkeit, insbesondere die Kerbschlagzähigkeit, besonders bei tiefen Temperaturen, verbessert wird.

ABS-Formmassen im Sinne der Erfindung sind Mischungen aus

a) 5–70 Gew.-% eines oder mehrerer Pfropfprodukte von Styrol, Gemischen aus Styrol und Acrylnitril, Gemischen aus Styrol und Methylmethacrylat oder Gemischen aus Styrol, Acrylnitril und Methylmethacrylat auf einen Kautschuk,

b) 95–30 Gew.-% eines oder mehrerer thermoplastischer Harze, die Polymerisate oder Copolymerisate von Styrol, α-Methylstyrol, Acrylnitril, Methylmethacrylat und Maleinsäureanhydrid darstellen.

Pfropfprodukte a) sind Polymerisate, die durch Polymerisation von Pfropfmonomeren in Anwesenheit eines Kautschuks als Pfropfbasis erhalten werden. Der Kautschukanteil ist 5–80 Gew.-% und wird durch das Polymerisationsverfahren mitbestimmt.

Als Pfropfbasis kommen Polybutadien-, Butadien/Acrylnitril- und Butadien/Styrol-Polymerisate sowie Butadien-Styrol-Blockpolymerisate in Betracht. Ebenfalls verwendbar sind Acrylester-Vinylether-Copolymerisate und EPDM-Terpolymerisate. Pfropfmonomere sind Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5, sowie Styrol-Acrylnitril-Methylmethacrylat-Gemische. Die Herstellung der Pfropfprodukte ist bekannt:

Man kann die Pfropfmonomeren in Gegenwart eines Latex der Pfropfbasis in Emulsion an radikalischen Initiatoren polymerisieren. Ist die Pfropfbasis anvernetzt und werden bestimmte Pfropfmonomer/Pfropfbasis-Verhältnisse eingehalten, so ist die Teilchengrösse des Latex der Pfropfbasis auch bestimmend für die Teilchengrösse des Pfropfpolymerisats. Die Pfropfhülle, aus chemisch an die Kautschukteilchen gebundenen Ketten des Polymerisats der Pfropfmonomeren, ist verhältnismässig dünn und ändert den Durchmesser des Kautschukteilchens nicht wesentlich. «Durchmesser» oder «Teilchengrösse» ist hierbei der mittlere Durchmesser $d_{50}$, d.h. der Durchmesser, oberhalb dessen und unterhalb dessen die Durchmesser von jeweils 50% der Teilchen liegen. Die Pfropfreaktion ist unvollständig. Neben dem eigentlichen Pfropfpolymerisat entsteht auch das nicht gepfropte Copolymere der Pfropfmonomeren. Deshalb wird das Produkt der Pfropfreaktion als «Pfropfprodukt» bezeichnet.

Man kann Pfropfprodukte auch durch Masse-Lösungs- oder Masse-Suspensions-Polymerisation herstellen, wenn man von einem monomerlöslichen Kautschuk ausgeht. Die Grösse der Pfropfkautschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen $\geqq 1$ µm erhalten. Das Pfropfprodukt enthält max. ca. 25 Gew.-% Kautschuk.

Man kann erfindungsgemäss Pfropfprodukte verwenden, deren Teilchen einen Durchmesser von 0,05–20 µm haben, wobei ein erheblicher Teil der Pfropfmonomeren im Innern des Kautschukteilchens als Homo- oder Copolymerisat includiert sein kann. Bevorzugt sind Teilchendurchmesser von 0,05 bis 1,2 µm bzw. 0,05–0,6 µm. Es ist auch möglich, mehrere voneinander verschiedene Pfropfprodukte nebeneinander einzusetzen, z.B. zwei Pfropfprodukte, die sich durch den Pfropfgrad bzw. die Pfropfdichte, die Kautschukteilchengrösse und/oder die Pfropfdichte unterscheiden. Besonders geeignet ist beispielsweise ein Gemisch aus einem Pfropfprodukt aus Kautschukteilchen mit einem $d_{50}$-Wert von 0,35 bis 10 µm und einem Pfropfprodukt aus Kautschukteilchen mit einem mittleren Teilchendurchmesser $d_{50}$ von 0,05–0,32 µm, d.h. sogenannte Bimodal-Systeme.

Bevorzugt enthalten die Pfropfprodukte 35–80 Gew.-% (insbesondere 40–70 Gew.-%) Kautschuk, besitzen einen mittleren Teilchendurchmesser im Bereich 0,1–0,5 µm und werden in einer solchen Menge eingesetzt, daß die Formmasse 5 bis 25 Gew.-%, vorzugsweise 5–20 Gew.-%, Kautschuk (Pfropfbasis) enthält.

Das den zweiten Bestandteil der ABS-Formmassen b) bildende thermoplastische Harz bildet die kontinuierliche Phase (Matrix) und ist ein Polymerisat oder Copolymerisat von Styrol, α-Methylstyrol, Acrylnitril, Methylmethacrylat und Maleinsäureanhydrid. Bevorzugt sind Polystyrol, Styrol-Acrylnitril-Copolymerisate mit einem Acrylnitril-Gehalt von 20–35 Gew.-% sowie α-Methylstyrol-Acrylnitril-Copolymere mit einem Acrylnitril-Gehalt von 20–31 Gew.-%. Das Gewichtsmittel des Molekulargewichts dieser Harze ist 50 000–550 000. Die molekulare Uneinheitlichkeit, ausgedrückt durch den Wert $\frac{M_w}{M_n} - 1 = U_n$ ist 1,0–3,5.

Wird nur ein Pfropfprodukt zur Herstellung der Formmassen verwendet, so ist es vorteilhaft, wenn die quantitative Zusammensetzung der Pfropfmonomeren und die der das Harz bildenden Monomeren weitgehend übereinstimmen. Verwendet man zwei Pfropfprodukte, so ist es vorteilhaft, wenn das Mengenverhältnis der Styrol- und Acrylnitrilteile im Polymerisat der Pfropfhülle der grobteiligeren Pfropfkomponente von dem des Harzes abweicht. α-Methylstyrol kann nicht als Pfropfmonomer verwendet werden.

Die Styrol- bzw. α-Methylstyrol-Acrylnitril-Copolymerisate können nach bekannten Verfahren hergestellt werden. Beispielhaft seien genannt: Masse-Polymerisation, Lösungs-Polymerisation, Suspensions-Polymerisation und Emulsions-Polymerisation.

Pfropfprodukt und thermoplastisches Harz werden häufig getrennt hergestellt; beide meist durch Emulsionspolymerisation. Fallen beide als Latex an, so können die Latices gemischt und gemeinsam ausgefällt werden.

Erfindungsgemäss geeignete «Silikourethanderivate» sind alle Umsetzungsprodukte von «organofunktionellen» Silikonen mit Polyisocyanaten und gegebenenfalls weiteren, gegenüber NCO–Gruppen reaktiven höhermolekularen Polyhydroxylverbindungen sowie Kettenverlängerungsmitteln wie Diolen, Diaminen, Aminoalkoholen und Dihydrazidverbindungen.

Als «organofunktionell» werden hier alle Silikon-Derivate angesehen, welche gegenüber Isocyanatgruppen reaktive, H-aktive Gruppen besitzen, zum Beispiel: HO–, $H_2N$–, HN–, HS–, HOOC–, $H_2N$–HN–OC–, $H_2N$–HN–CO–O–, $H_2N$–HN–CO–HN-Endgruppen*.

* Bevorzugt sind HO–, $H_2N$–, HN–Alkyl und HN–Cycloalkyl-Endgruppen.

Zum Aufbau von polymeren Silikourethanderivaten sind im wesentlichen difunktionelle organofunktionelle Derivate bevorzugt, wie sie in den US-PSS 3 243 475 (Spalte 3/4); 3 567 499 (Spalte 3/4); 3 246 048 (Spalte 2ff.) beschrieben sind.

Weitere einsetzbare organofunktionelle Silikonderivate sind beispielsweise auch in der US-PS 4 057 595 beschrieben.

Bevorzugt sind Silicone der Formel

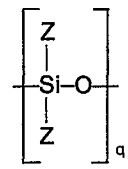

in der Z = Methyl (Polydimethylsiloxane), von dem ein Teil auch durch Alkylreste (z.B. Amyl-Reste) ersetzt sein kann, oder Aryl (bevorzugt Phenyl); q ist 3 bis 100, vorzugsweise 5 bis 50.

Bevorzugt werden organofunktionelle Silicon-Derivate, welche eine –Si–C–Bindung aufweisen (z.B. eine –Si–$CH_2$–OH–Gruppe), wie sie in der US-PS 3 243 475, Spalte 2, Zeilen 10–55 aufgeführt sind, da sie hydrolytisch stabilere Bindungen aufweisen als die –Si–O–C–Gruppierungen, jedoch sind auch Silicone, welche die organofunktionelle Gruppe über eine –Si–O–C–Bindung enthalten, gleichfalls geeignet. Die Silicon-Derivate können auch Blockpolymere sein, wie sie in der US-PS 3 600 418 beschrieben werden.

Als difunktionelle Silikon-Derivate seien beispielsweise angeführt:

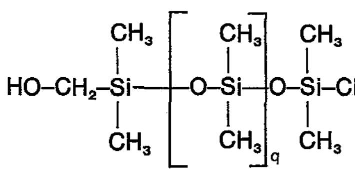

q = vorzugsweise 5Ø – 50

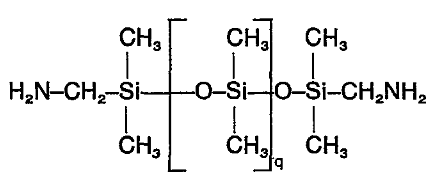

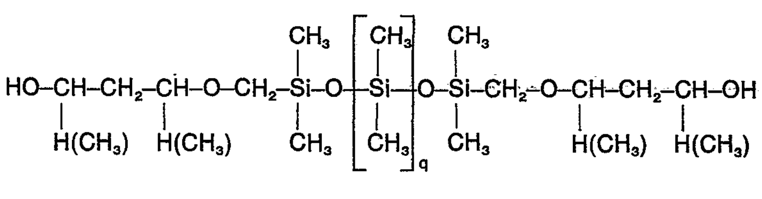

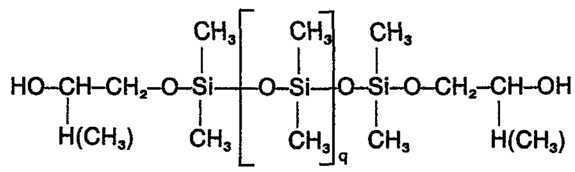

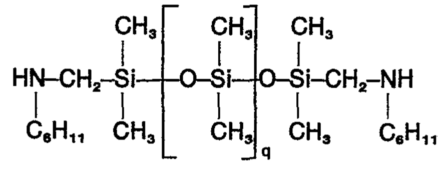

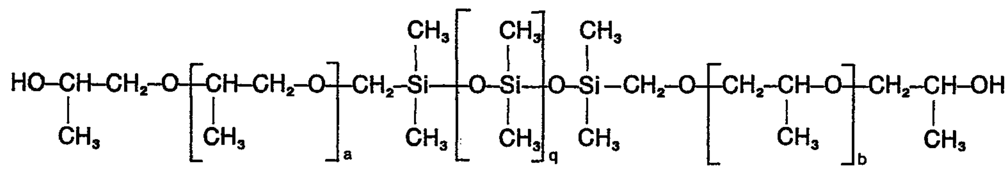

a = 1–30 b = 1–30

Weitere Beispiele sind in der US-PS 4 057 595, Spalte 3, Zeilen 7–34, Spalte 4, Zeilen 23 bis 35 angeführt, wobei die in Spalte 4, Zeile 36ff. angegebene Einschränkung bezüglich des Monomerengehaltes hier nicht beachtet werden muss.

Für die Verwendung der Silikonurethanderivate im Sinne der Erfindung hat sich jedoch überraschend herausgestellt, dass auch organofunktionelle Silikone mit einer deutlich unter 2 liegenden Funktionalität Silikonurethanderivate aufzubauen gestatten, welche eine hervorragende Wirksamkeit aufweisen. Die organofunktionellen Silikone können dabei Mischungen aus monofunktionellen und difunktionellen (evtl. auch Anteilen von tri- und höherfunktionellen) Organo-Silikonen darstellen, wobei etwa folgende monofunktionelle Silikone (mit)verwendet werden können

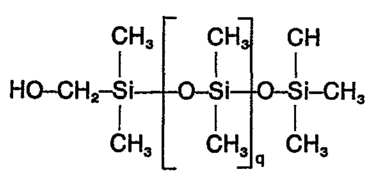

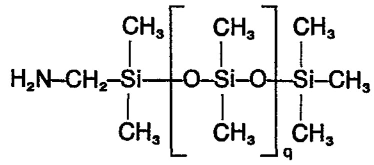

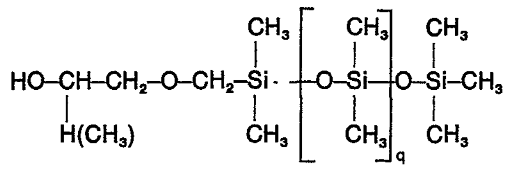

Beispiele für höherfunktionelle Silikone sind in den bereits angeführten US-Patentschriften enthalten.

Die organofunktionellen Silikone können ferner in Mischung mit mono-, di- oder höherfunktionellen Alkoholen, Aminen, Hydrazid-Verbindungen umgesetzt werden. Dies können niedermolekulare Verbindungen wie 1-Hydroxybutan, 1,4-Butandiol, 1,6-Cyclohexan-diol, Trimethylolpropan, Di-n-butylamin, N,N-Dimethylhydrazin, Isophorondiamin, 4,4′-Diaminodicyclohexylmethan, 1,5-11-Triaminoundekan sein oder auch höhermolekulare Verbindungen wie die bekannten höhermolekularen linearen Dihydroxypolyester, -polyäther, -polycaprolaktonester, -polyacetale (vgl. DE-PS 1 157 386 und DE-OS 1 770 591. Auch trifunktionelle Verbindungen, z. B. auf Glycerin oder Trimethylolpropan gestartete trifunktionelle Polycaprolaktonester, sind einsetzbar, wenn die Funktionalitätt der Gesamtmischung unter oder nahe an zwei liegt. Generell wirken für die Synthese monofunktionelle Komponenten als Abbrecher, tri- und höherfunktionelle Verbindungen stark verzweigend, und können bei der Synthese löslicher Silicourethane nur in begrenzter Menge eingesetzt werden.

Zur Synthese der «Silikourethanderivate» können im Prinzip alle organischen Polyisocyanate, vorzugsweise Diisocyanate, verwendet werden (vgl. u.a. DE-PS 1 157 386 und DE-OS 17 70 591), z.B. aliphatische oder cycloaliphatische, aromatische oder heterocyclische Diisocyanate. Besonders geeignet sind 1,6-Hexandiisocyanat, 4,4'-Dicyclohexylmethan-diisocyanate, 1-Isocyanate-3-isocyanatomethyl-, 3,5,5-Trimethyl-cyclohexan (Isophorondiisocyanat), die Toluylendiisocyanate und 4,4'-Diphenylmethan-diisocyanat.

Die Silikourethanderivate können durch Umsetzung der organofunktionellen Silikone, gegebenenfalls in Beimischung von funktionellen, silikonfreien Verbindungen (z.B. Butandiol oder Dihydroxypolyester mit Molekulargewichten von 1000 bis 2000 oder ähnlichen) mit den Polyisocyanaten erhalten werden.

Setzt man beispielsweise OH-funktionelle Silikone mit Diisocyanaten, zum Beispiel Isophorondiisocyanat, in äquivalenten Mengen um, so entstehen «Silikourethanderivate» einfacher Struktur, welche im allgemeinen Öle oder niedrigschmelzende Massen darstellen.

Bei Mitverwendung von höhermolekularen Dihydroxy-Polyestern oder -Polyäthern entstehen schwach elastische, modifizierte Siliko-(polyester/polyäther)urethane als plastische Massen mit niedrigen Erweichungsbereichen.

Setzt man die organofunktionellen Silikone mit einem molaren Überschuss Polyisocyanat um, so erhält man zunächst Präpolymere mit endständigen Isocyanatgruppen, welche anschliessend mit difunktionellen Kettenverlängerungsmitteln (gegebenenfalls in Mischung mit mono- oder trifunktionellen Modifikatoren, z.B. Butandiol-1,4, Bishydroxyäthylterephthalsäureester, Aminoäthanol, Äthylendiamin, Propylendiamin, Isophorondiamin, Hydrazin oder Dihydrazid-Verbindungen wie Carbodihydrazid, 4-Semicarbazidopropionsäurehydrazid zu einem segmentierten Silikourethan(harnstoff)elastomeren umgesetzt werden.

Verwendet man neben den organofunktionellen Silikonen höhermolekulare Dihydroxyverbindungen, wie Polyesterdiole oder Polyätherdiole, zur Präpolymerbildung, so erhält man in Dimethylformamid lösliche elastomere Produkte, die auch in den ABS-Polymeren eine sehr gute Erhöhung der Kerbschlagzähigkeit bewirken.

Solche «segmentierten» Siliko-(polyester- oder polyäther)urethanharnstoffe sind besonders bevorzugte Silikourethanderivate.

Die Silikourethanderivate (bzw. Siliko-harnstoffe, die unter diesen Begriff mit eingeschlossen werden sollen, da sie nach den Regeln des Diisocyanat-Polyadditionsverfahrens aufgebaut werden) können auch dadurch erhalten werden, dass man NCO-Präpolymere aus z.B. Dihydroxypolyester- oder -polyäther und überschüssigen Diisocyanaten mit $H_2N$-funktionellen Silikonen «kettenverlängert».

Die vorstehende Beschreibung der Herstellung von «Silikourethanderivaten» ist nur beispielhaft – im Sinne des Diisocyanat-Polyadditionsverfahrens sind vielfache Abwandlungen möglich.

Die Silikourethanderivate sind in den meisten Fällen nicht mehr in normalen Silikonen löslich.

Die erfindungsgemäss zu verwendenden Silikourethanderivate sollten einen Anteil an Silikonstrukturen (Rest der organofunktionellen Silikone ohne die Endgruppen) von mindestens 10 Gew.-%, bevorzugt von mehr als 30 Gew.-% und bevorzugt von mehr als 50 Gew.-% enthalten.

Gegenstand der Erfindung ist somit die Verwendung von 0,05 bis 2 Gew.-%, bezogen auf die Formmasse, von Silikourethanderivaten mit einem Anteil von mindestens 10 Gew.-%, vorzugsweise mindestens 30 Gew.-%, an Poly-di-alkyl-, Poly-di-phenyl- bzw. Polyalkylarylsiloxanen im Silikourethan als die Kerbschlagzähigkeit verbessernder Zusatz zu ABS-Formmassen.

Gegenstand der Erfindung ist insbesondere die Verwendung von 0,05 bis 2 Gew.-%, bezogen auf die Formmasse, von Silikourethanderivaten, die Umsetzungsprodukte aus organofunktionellen Polysiloxanen, Polyisocyanaten und funktionellen silikonfreien Verbindungen darstellen, als die Kerbschlagzähigkeit verbessernder Zusatz zu ABS-Formmassen.

Die Silikourethanderivate können für sich allein oder zusammen mit 0,25 bis 5 Gew.-%, bezogen auf die Formmasse, der üblichen Gleitmittel angewendet werden. Bevorzugt ist die Kombination von

0,1–1,0 Gew.-Teilen Silikourethanderivat
0,25–3,0 Gew.-Teilen Pentaerythrittetrastearat,

und die Kombination

0,1–1,0 Gew.-Teilen Silikourethanderivat
0,25–2,0 Gew.-Teilen Pentaerythrittetrastearat
0,5–1,5 Gew.-Teilen Bisstearylamid des Äthylendiamins.

Besonders bevorzugt sind ABS-Formmassen aus

550 Gew.-Teilen eines Pfropfproduktes aus
40–80 Gew.-Teilen Polybutadien und
60–20 Gew.-Teilen in dessen Gegenwart erzeugtem Styrol-Acrylnitril-Copolymerisat mit einem Teilchendurchmesser $d_{50}$ von 0,1–0,6 µm, bevorzugt 0,25 bis 0,5 µm,
95–50 Gew.-Teilen eines Copolymerisates aus
75–70 Gew.-% Styrol und 25–30 Gew.-% Acrylnitril oder aus
70 Gew.-% α-Methylstyrol und 30 Gew.-% Acrylnitril,

wobei die Formmasse nicht mehr als 30 Gew.-% Polybutadien enthält.

Ebenfalls bevorzugt sind ABS-Formmassen aus

6–30 Gew.-Teilen eines Pfropfproduktes von
20–60 Gew.-Teilen einer Mischung aus Styrol und Acrylnitril im Gewichtsverhältnis 88:12 bis 60:40 auf 80–40 Gew.-Teile eines Butadien-Homo- oder Copolymerisats mit einem Butadiengehalt $\geqq 70$ Gew.-% und einem mittleren Teilchendurchmesser $d_{50}$ von 0,26–0,65 µm;
14–45 Gew.-Teilen eines Pfropfproduktes von

60–40 Gew.-Teilen einer Mischung aus Styrol und Acrylnitril im Gewichtsverhältnis 80:20–60:40 auf 40–60 Gew.-Teile eines Butadien-Homo- oder Copolymerisats mit einem Butadiengehalt ≧70 Gew.-% und einem mittleren Teilchendurchmesser $d_{50}$ von 0,08–0,25 µm,

25–80 Gew.-Teilen eines Copolymerisats von Styrol und/oder α-Methylstyrol einerseits und Acrylnitril anderseits im Gewichtsverhältnis von 80:20 bis 60:40 und einem mittleren Molekulargewicht von 50 000–200 000.

Die Silkourethanderivate werden der ABS-Formmasse vorzugsweise bei der Compoundierung zugesetzt. Wird das ABS durch Masse-Suspensionspolymerisation hergestellt, so kann das Silkourethanderivat auch während der Polymerisation zugesetzt werden.

Silikourethane in den angegebenen Mengen erhöhen die Kerbschlagzähigkeit ohne Beeinträchtigung der sonstigen physikalischen Eigenschaften. Silikourethanderivate wirken besonders bei sehr tiefen Temperaturen besser als reine Siloxane gemäss US-PS 3 064 239. Silikourethanderivate, mit geeigneten Gleitmitteln kombiniert, ergeben ABS-Formmassen mit optimalen Produkteigenschaften.

Beispiele

A. Herstellung und Charakteristik der ABS-Formmassen

Für die Herstellung der ABS-Formmassen wurden zwei Verfahren benutzt:

1. Der durch Emulsionspolymerisation hergestellte Pfropfkautschuklatex wird mit einem oder mehreren durch Emulsionspolymerisation hergestellten SAN-Copolymerisaten-Latices in bestimmtem Mengenverhältnis gemischt. Nach Zugabe einer wässrigen Stabilisatordispersion – die pro 100 Gew.-Teile Polymer 0,25–1,5 Gew.-Teile eines phenolischen Antioxydants enthält – wird die Latex-Mischung durch Elektrolyt- bzw. Säurezusatz koaguliert. Das resultierende Pulver wird bei 70–80 °C im Vakuumtrockenschrank getrocknet.
2. Der durch Emulsionspolymerisation hergestellte Pfropfkautschuklatex – oder auch eine Mischung mehrerer Pfropfkautschuklatices – wird nach Stabilisatorzusatz koaguliert und zum Pulver aufgearbeitet. SAN-Copolymerisat kann – falls erforderlich – wie unter B beschrieben eingearbeitet werden.

Die benutzten ABS-Pfropfkautschuke bzw. SAN-Copolymerisate sind in Tabelle 1 und 2 charakterisiert.

Tabelle 1
Pfropfkautschuke

| Pfropfpolymer Bezeichnung | Gew.-Verhältnis Pfropfgrundlage: Pfropfauflage | Gew.-Verhältnis Styrol:Acrylnitril i.d. Monomermischg. | Mittlerer[1] Teilchen-durchmesser $d_{50}$ (µm) | G-Wert[2] | Zusammensetzung[3] der Pfropfgrundlage B Gew.-% | S Gew.-% |
|---|---|---|---|---|---|---|
| P 1 | 50:50 | 70:30 | 0,4 | 0,55 | 100 | – |
| P 2 | 60:40 | 88:12 | 0,4 | 0,45 | 100 | – |
| P 3 | 50:50 | 70:30 | 0,1 | 0,72 | 100 | – |

[1] Ultrazentrifugen-Messungen, vgl. W. Scholtan, H. Lange, Kolloidz. und Z. Polymere 250 (1972) 783–796 bzw. G. Kämpf, H. Schuster, Angew. Makromol. Chemie 14 (1970) 111–129.
Mit Teilchendurchmesser ist immer der $d_{50}$-Wert gemeint.
[2] Pfropfgrad G (G-Wert) bezeichnet das Verhältnis Styrol/Acrylnitril gepfropft: Pfropfgrundlage als dimensionslose Zahl.
[3] B = Butadien, S = Styrol

Tabelle 2
Styrol-Acrylnitril- und α-Methylstyrol-Acrylnitril-Copolymere

| Copolymerisat Bezeichnung | Copolymerisat-Zusammensetzung (Gew.-%) Styrol/Acrylnitril/α-Methylstyrol | Viskosität[1] $\frac{\eta\ spez.}{C}$ | Molekulare Uneinheitlichkeit[2] $U_n$ |
|---|---|---|---|
| S 1 | 74:26 | 95 | 3,0 |
| S 2 | 70:30 | 110 | 2,5 |

[1] Viskosität $= \frac{\eta spez.}{C}$ bei C = 5 g/l in Methyläthylketon bei 25 °C

[2] $U_n = \frac{M_w}{M_n} - 1$ $M_w$ = Gewichtsmittel der Molmasse, $M_n$ = Zahlenmittel der Molmasse

B. Compoundierung

Für das Mischen von Pfropfprodukt und thermoplastischem Harz sowie für das Einarbeiten des Silikourethanderivates können alle bekannten Compoundierungsaggregate verwendet werden, wenn sie bei 140–260 °C eine homogene Durchmischung bewirken. In Frage kommen u.a. beheizbare Mischwalzwerke mit nachgeschaltetem Granulator, zweiwellige bzw. vierwellige Schneckenkneter mit nachgeschalteter Granuliereinrichtung sowie Innenmischer und Banbury-Mixer mit nachgeschaltetem Zweiwalzenstuhl und Granulator.

Hier wurde ein Banbury-Mixer BR (Pomini-Farrel) bei den folgenden Mischbedingungen benutzt:

Massetemperatur: 190–225 °C

Mischzeit: 1,5–2 Min.

Cycluszeit: 2,0–4 Min.

Nach dem Mischen fällt das Material als plastische Masse auf einen Zweiwellenstuhl (Walze 1 T = 160 °C, Walze 2 T = 150 °C) und wird in Form eines Bandes abgenommen, das nach Abkühlung granuliert wird.

C. Prüfmethodik

Aus dem Granulat werden durch Spritzguss bei 220 °C Normkleinstäbe hergestellt. Diese werden nach DIN-Methoden zur Ermittlung der Kerbschlagzähigkeit, Schlagzähigkeit und Härte und der Wärmestandfestigkeit nach Vicat B geprüft. Die Verarbeitbarkeit wird mit dem Flachspiraltest nach H. Ebneth, K. Böhm: Fliessfähigkeit von ABS-Polymerisaten; Plastverarbeiter 19 (1968) 4, S. 261–269, bei 220 °C geprüft.

D. Herstellung der Silikourethanderivate

Beispiele 1–11

(Angaben in Gew.-Teilen und Gew.-%)

(DMA = Dimethylacetamid/DMF = Dimethylformamid)

$\eta_{inh}$-Werte wurden bei 30 °C in DMA als 0,5%ige Lösung gemessen.

Zum Begriff des $\eta_{inh}$-Wertes siehe M. Hoffmann, H. Krömer und R. Kuhn «Polymeranalytik» I, Georg-Thieme-Verlag, Stuttgart, 1977.

Beispiel 1

2300 Teile eines organofunktionellen Polydimethylsiloxanderivates mit $-CH_2OH$-Endgruppen (2,19 Gew.% OH als funktionelle Gruppen enthaltend) werden mit 328,88 Teilen 1-Isocyanato-3-isocyanato-methyl-3,5,5-trimethyl-cyclohexan (Isophoron-Diisocyanat) 4 Std. auf 100 °C erwärmt, bis der NCO-Gehalt auf Null abgesunken ist. Das entstandene farblose Öl besitzt eine Viskosität von 2,57 Pa.s und ein relativ niedriges Molekulargewicht ($\eta_{inh}$ = 0,06).

Der Brechungsindex beträgt $n\frac{20}{D} = 1,4303$.

Beispiel 2

500 Teile eines organofunktionellen Polydimethylsiloxanderivates mit $CH_2OH$-Endgruppen (mit 2,0% OH) werden mit 49,4 Teilen Hexan-1,6-diisocyanat vermischt und 4 Std. auf 100 °C erhitzt, bis alle Isocyanatgruppen umgesetzt sind. Die Viskosität des Silikourethanderivates beträgt 1,37 Pa.s bei 20 °C. Das Molekulargewicht ist relativ niedrig.

Der Brechungsindex $n\frac{20}{D}$ beträgt 1,4252.

Beispiel 3

500 Teile des organofunktionellen Polydimethylsiloxanderivates mit $-CH_2OH$-Endgruppen (2,0% OH) werden mit 73,53 Teilen Diphenylmethan-4,4'-diisocyanat bei 40 °C vermischt und die trübe Mischung auf 60–90 °C erwärmt. Unter Viskositätsanstieg ist nach 20 Min. bei 90 °C alles Isocyanat umgesetzt. Das Öl hat eine Viskosität von 9,24 Pa.s und einen Brechungsindex von $n\frac{20}{D} = 1,4420$.

Beispiel 4

500 Teile eines organofunktionellen Polydimethylsiloxans mit $-CH_2OH$-Endgruppen (2,0% OH) werden mit 51,18 Teilen Toluylen-2,4-diisocyanat vermischt und innerhalb von 30 Min. auf 90 °C erwärmt. Die trübe Mischung geht dabei unter Viskositätsanstieg in ein klares Öl über, das nach 30 Min. Erwärmen auf 90 °C keine Isocyanatgruppen mehr enthält. Die Viskosität des Öls beträgt 2,78 Poise, der Brechungsindex $n\frac{20}{D} = 1,4353$.

Beispiel 5

1100 Teile eines organofunktionellen Polydimethylsiloxans mit $Si-CH_2OH$-Endgruppen (2,0% OH) werden bei 50 °C mit einer Schmelze von 1100 Teilen eines Adipinsäure-1,6-Hexandiol-2,2-Dimethylpropandiol-1,3-Copolyesters (Mol.-Verhältnis der Glykole 65:35) und einem OH-Endgruppengehalt von 1,592% OH vermischt und mit einer Lösung von 458,85 Teilen Diphenylmethan-4,4'-diisocyanat in 664,7 Teilen Dimethylformamid versetzt. Nach 120 Min. Reaktionszeit bei 50 °C ist eine 80% Feststoff enthaltende NCO-Präpolymerlösung mit einem NCO-Gehalt von 2,23% (bezogen auf Feststoff) entstanden.

3000 Teile dieser NCO-Voradduktlösung werden in eine frisch hergestellte Suspension des Äthylendiamincarbonats (38,12 Teile Äthylendiamin in 4349 Teilen Dimethylformamid, mit 50 Teilen fester Kohlensäure versetzt) eingetragen. Unter Viskositätsanstieg entsteht eine Lösung mit einer Viskosität von 0,6 Pa.s/20 °C. Das Molekulargewicht des elastomeren Silikourethan(harnstoff)s ist relativ niedrig, der $\eta_{inh}$-Wert beträgt 0,39.

Giesst man die DMF-Lösung zu einem Film (Trocknung bei 100 °C), so erhält man eine elastische Folie, die zwischen 135 und 160 °C stark erweicht. Das Silikourethan-Elastomere wird beispielsweise aus DMF-Lösung durch Eingiessen in überschüssiges Methanol ausgefällt und mit frischem Methanol DMF-frei gewaschen.

Beispiel 6

100 Teile des organofunktionellen Dimethylpolysiloxans mit $-CH_2OH$-Endgruppen (2,0% OH), 100 Teile des in der Herstellungsvorschrift 5.) beschriebenen Copolyesters (1,592% OH) und 10,75

Teile eines trifunktionellen Polyesters aus Trimethylolpropan und Caprolacton, Molgewicht 1016 (5,0% OH) werden mit einer Lösung von 45,6 Teilen Diphenylmethan-4,4'-diisocyanat in 64 Teilen Dimethylformamid und 40 Min. bei 50 °C zu einer NCO-Präpolymerlösung mit einem NCO-Gehalt von 1,806% (bezogen auf Festsubstanz) umgesetzt.

1,11 Teile Ethylendiamin werden in 170 Teilen Dimethylformamid gelöst, mit 3 Teilen fester Kohlensäure versetzt und mit 107,5 Teilen NCO-Präpolymer unter Rühren versetzt. Es entsteht eine mässig viskose, farblose Elastomerlösung mit einer Lösungsviskosität von 1,93 Pa.s und einer inhärenten Viskosität $\eta_{inh}$ von 0,515. Die Elastomerlösung wird in überschüssiges Methanol eingerührt und das Elastomere daraus isoliert.

Beispiel 7

107,5 Teile der in Beispiel 5 angegebenen NCO-Präpolymerlösung werden in eine Lösung von 0,925 Teilen Hydrazinhydrat in 170 Teilen Dimethylformamid eingetragen, wobei eine schwach trübe, viskose (2,1 Pa.s) Elastomerlösung entsteht. Durch Fällung in Methanol wird die elastomere Silkourethan(harnstoff)-Substanz isoliert.

Beispiel 8

107,5 Teile der in Beispiel 5 angegebenen NCO-Präpolymerlösung werden in eine Lösung von 3,11 Teilen $H_2N \cdot NH \cdot CO \cdot NH \cdot CH_2 \cdot CH_2 \cdot CO \cdot NH \cdot NH_2$ in 7 Teilen Wasser und 164 Teilen Dimethylacetamid eingerührt. Die viskose Lösung (3,1 Pa.s) wird in Methanol gefällt und zur elastomeren Silikourethan(harnstoff)-Festsubstanz getrocknet.

Beispiel 9

300 Teile eines organofunktionellen Polydimethylsiloxans mit $-Si-CH_2-$Endgruppen (2,915% OH), 549,2 Teile des in Vorschrift 5.) beschriebenen Copolyesters (1,592% OH) und 128,6 Teile Diphenylmethan-4,4'-diisocyanat werden in 680 Teilen Dimethylformamid 2 Std. auf 50 °C erwärmt, bis der NCO-Gehalt auf Null abgesunken ist. Die Elastomersubstanz wird durch Eingiessen in Methanol ausgefällt und als Paste isoliert. Der $\eta_{inh}$-Wert beträgt 0,31.

Beispiel 10

1000 Teile Polytetramethylenglykol vom Molekulargewicht 2000 (Polymeg 2000, Quaker Oats Company), 4,47 Teile Trimethylolpropan, 400 Teile des organofunktionellen Polydimethylsiloxans mit $-Si-CH_2OH-$Endgruppen (1,592% OH) werden mit einer Lösung von 368,5 Teilen Diphenylmethan-4,4'-diisocyanat in 443 Teilen Dimethylformamid 1 Std. bei 40–45 °C umgesetzt, bis die NCO-Präpolymerbildung abgeschlossen ist. Das Präpolymere weist einen NCO-Gehalt von 3,49% (bezogen auf Festsubstanz) auf.

1875 Teile der NCO-Präpolymerlösung werden in eine Lösung von 101,2 Teilen 1-Amino-3-aminomethyl-3,5,5-trimethylcyclohexan (Isophorondiamin) und 8,1 Teilen Di-n-butylamin in 2845 Teilen Dimethylformamid eingetragen. Die entstandene Elastomerlösung wird durch Ausfällen in Wasser/Methanol in die Festsubstanz überführt, welche eine plastische Elastomermasse darstellt.

Beispiel 11

1000 Teile eines lineraren Polypropylenetherdiols (Molekulargewicht 1000) werden mit 500 Teilen Diphenylmethan-4,4'-diisocyanat etwa 2 Std. bei 50–70 °C zum NCO-Präpolymer umgesetzt, bis der NCO-Gehalt auf 5,59% abgesunken ist.

Eine Suspension eines organofunktionellen Polydimethylsiloxans mit $-Si-CH_2-NH-C_6H_5-$Endgruppen und einem mittleren Molekulargewicht von etwa 1392 der Formel

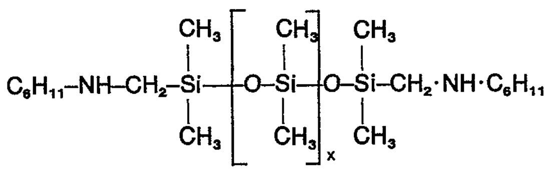

farbloses, klares Öl,
x = (im Mittel) 14

in DMF (1000 Teile Silicondiamin in 2950 Teilen DMF) wird unter starkem Rühren mit 1000 Teilen der NCO-Schmelze versetzt und die entstandene Elastomerlösung in Methanol ausgefällt und zum Feststoff getrocknet.

Beispiele 11 bis 20, Vergleichsbeispiel a

Durch Latexmischung und Koagulation wird eine Formmasse folgender Zusammensetzung hergestellt:

| | |
|---|---|
| Pfropfpolymerisat P 2 | 155 Gew.-Teile |
| Pfropfpolymerisat P 3 | 245 Gew.-Teile |
| Harzpolymerisat S 1 | 600 Gew.-Teile |

Das Pulver wird im Banbury-Mixer BK gemäss B compoundiert und dabei auf 100 Gew.-Teile Pulver zugefügt.

| Beispiel | Silikourethanderivat (Gew.-Teile) |
|---|---|
| a | – (Vergleich) |
| 11–20 | 0,5 der Verbindungen aus Beispiel 1–10. |

Die Ausprüfung gemäss C. führt zu den in Tabelle 3 aufgeführten Daten:

Tabelle 3

| Beispiel | a | 11 | 12 | 13 | 14 | 15 | 16 | 17 | 18 | 19 | 20 |
|---|---|---|---|---|---|---|---|---|---|---|---|
| Kerbschlagzähigkeit 23 °C, kJ/m² | 5,3 | 15,2 | 15,7 | 15,9 | 16,0 | 15,7 | 16,1 | 15,9 | 16,0 | 15,3 | 16,0 |
| Kugeleindruckhärte 30 s | 88,1 | 88,0 | 88,3 | 88,0 | 88,2 | 88,0 | 88,6 | 88,2 | 88,0 | 88,5 | 88,4 |
| Fliesslänge an Flachspirale, cm bei 220 °C | 37,0 | 37,5 | 37,0 | 37,5 | 37,5 | 37,5 | 37,0 | 37,5 | 37,0 | 37,0 | 37,5 |
| Silikourethanderivat gemäss Beispiel (0,5 Gew.-%) | – | 1 | 2 | 3 | 4 | 5 | 6 | 7 | 8 | 9 | 10 |

Wie aus Tabelle 3 hervorgeht, führt der Zusatz von 0,5 Gew.-Teilen Silikourethanderivat zu erheblichen Kerbschlagverbesserungen.

Beispiele 21 bis 24, Vergleichsbeispiel b

Durch Latexmischung und Koagulation wird eine ABS-Formmasse folgender Zusammensetzung hergestellt:

Pfropfpolymerisat P 1 25 Gew.-Teile
Harzpolymerisat S 2 75 Gew.-Teile

Gemäss B. werden im Innenkneter zugesetzt (Gew.-Teile, bezogen auf 100 Gew.-Teile ABS-Pulver):

| Beispiel | Silikourethanderivat (Gew.-Teile) | Ca-Stearat (Gew.-Teile) |
|---|---|---|
| b | – | – |
| 21 | 0,5 Produkt aus Beispiel 2 | 0,5 |
| 22 | 0,5 Produkt aus Beispiel 5 | 0,5 |
| 23 | 0,5 Produkt aus Beispiel 7 | 0,5 |
| 24 | 0,5 Produkt aus Beispiel 10 | 0,5 |

Die Ausprüfung gemäss C führt zu den in Tabelle 4 aufgeführten Daten:

Tabelle 4

| Beispiel | b | 21 | 22 | 23 | 24 |
|---|---|---|---|---|---|
| Kerbschlagzähigkeit 23 °C, kJ/m² | 7,2 | 18,9 | 19,0 | 19,0 | 18,9 |
| Kugeleindruckhärte 30 s | 93 | 95 | 94 | 95 | 94 |

Beispiel 25 bis 29

Durch Latexmischung und Koagulation wird eine Formmasse folgender Zusammensetzung hergestellt:

Pfropfpolymerisat P 1 40 Gew.-Teile
Harzpolymerisat S 1 60 Gew.-Teile

Gemäss B. werden im Innenkneter zugesetzt (Gew.-Teile, bezogen auf 100 Gew.-Teile ABS-Pulver):

| Beispiel | Silikourethanderivat | Gew.-Teile |
|---|---|---|
| 25 | Polydimethylsiloxan (Vergleich) Viskosität bei 20 °C = 100 cSt. | 0,2 |
| 26 | Produkt aus Beispiel 1 | 0,5 |
| 27 | Produkt aus Beispiel 6 | 0,5 |
| 28 | Produkt aus Beispiel 8 | 0,5 |
| 29 | Produkt aus Beispiel 9 | 0,5 |

Die Ausprüfung gemäss C führt zu den Werten in Tabelle 5:

Tabelle 5

| Beispiel | 25 | 26 | 27 | 28 | 29 |
|---|---|---|---|---|---|
| Kerbschlagzähigkeit −40 °C, kJ/cm² | 3,6 | 5,9 | 6,2 | 6,4 | 6,2 |

**Patentansprüche**

1. ABS-Formmassen aus

a) 5–70 Gew.-% eines oder mehrerer Pfropfprodukte von Styrol, Gemischen aus Styrol und Acrylnitril, Gemischen aus Styrol und Methylmethacrylat oder Gemischen aus Styrol, Acrylnitril und Methylmethacrylat auf einen Kautschuk mit einem Kautschukanteil von 5–80 Gew.-%, wobei der Kautschuk ein Butadien-, Butadien/Acrylnitril-, Butadien/Styrol-, Butadien-Styrol-Block-Polymerisat, ein Acrylester-Vinylether-Copolymerisat oder ein EPDM-Copolymerisat ist,

b) 95–30 Gew.-% eines oder mehrerer thermoplastischer Harze, die Polymerisate oder Copolymerisate von Styrol, α-Methylstyrol, Acrylnitril, Methylmethacrylat und Maleinsäureanhydrid darstellen,

gekennzeichnet durch einen Gehalt von 0,05 bis 2,0 Gew.-% eines Silikourethanderivates, das durch Umsetzung von Polydialkylsiloxan-, Polyarylalkylsiloxan- bzw. Polydiarylsiloxanderivaten mit Polyisocyanaten erhalten worden ist, und das mindestens 10 Gew.-% an Polydialkyl-, Polydiphenylsiloxanen oder Polyalkylphenylsiloxanen enthält.

2. ABS-Formmasse nach Anspruch 1, dadurch gekennzeichnet, dass das Pfropfprodukt a) durch Polymerisation der Pfropfmonomeren Styrol, Styrol und Acrylnitril, Styrol und Methylmethacrylat oder Styrol und Acrylnitril und Methylmethacrylat auf einen Polybutadien-, Butadien/Acrylnitriloder Butadien/Styrol-Kautschuk erhalten worden ist, und dass das thermoplastische Harz ein Styrol/Acrylnitril-Copolymerisat ist.

3. ABS-Formmasse nach Anspruch 1, dadurch gekennzeichnet, dass das Silikourethanderivat durch Umsetzung eines organofunktionellen Polydimethylsiloxans mit der wiederkehrenden Einheit der Formel

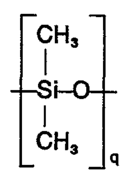 , q = 5–50

wobei die Endgruppen primäre und/oder sekundäre OH–Gruppen und/oder primäre und/oder sekundäre Aminogruppen sind, mit Polyisocyanaten erhalten worden ist.

**Claims**

1. ABS moulding compositions comprising

a) 5–70% by weight of one or more graft products of styrene, mixtures of styrene and acrylonitrile, mixtures of styrene and methylmethacrylate, or mixtures of styrene, acrylonitrile and methyl methacrylate on a rubber having a rubber content of 5 to 80% by weight, the rubber being a butadiene, butadiene/acrylonitrile, butadiene/styrene, or butadiene/styrene block polymer, an acrylic ester/vinylether copolymer or an EPDM copolymer,

b) 95–30% by weight of one or more thermoplastic resins, which are polymers or copolymers of styrene, α-methylstyrene, acrylonitrile, methyl methacrylate and maleic acid anhydride,

characterised in that they contain 0.05 to 2.0% by weight of a silico-urethane derivative which has been obtained by reacting derivatives of polydialkyl siloxane, polyarylalkyl siloxane or polydiaryl siloxane with polyisocyanates, and which contains at least 10% by weight of polydialkyl siloxanes, polydiphenyl siloxanes or polyalkylphenyl siloxanes.

2. ABS moulding composition according to Claim 1, characterised in that the graft product a) has been obtained by polymerisation of the graft monomers styrene, styrene and acrylonitrile, styrene and methyl methacrylate or styrene and acrylonitrile and methyl methacrylate on to a polybutadiene, butadiene/acrylonitrile or butadiene/styrene rubber, and in that the thermoplastic resin is a styrene/acrylonitrile copolymer.

3. ABS moulding composition according to Claim 1, characterised in that the silico-urethane derivative has been obtained by reacting an organofunctional polydimethyl siloxane having the recurring unit of the formula

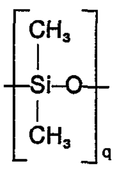 , q = 5–50 ,

the end groups being primary and/or secondary OH-groups and/or primary and/or secondary amino groups, with polyisocyanates.

**Revendications**

1. Matières à mouler d'acrylonitrile/butadiène/styrène constituées de:

a) 5–70% en poids d'un ou de plusieurs produits greffés de styrène, de mélanges de styrène et d'acrylonitrile, de mélanges de styrène et de méthacrylate de méthyle ou de mélanges de styrène, d'acrylonitrile et de méthacrylate de méthyle sur un caoutchouc un une quantité de 5 à 80% en poids, le caoutchouc étant un polymère de butadiène, de butadiène/acrylonitrile ou de butadiène/styrène, un polymère en blocs de butadiène/styrène, un copolymère d'ester acrylique/éther vinylique ou un copolymère d'éthylène/propylène/monomère diénique,

b) 95–30% en poids d'une ou plusieurs résines thermoplastiques qui sont des polymères ou des copolymères de styrène, d'α-méthylstyrène, d'acrylonitrile, de méthacrylate de méthyle et d'anhydride d'acide maléique,

caractérisées en ce qu'elles contiennent 0,05 à 2% en poids d'un dérivé de silicouréthane que l'on obtient par réaction de dérivés de polydialkylsiloxanes, de polyarylalkylsiloxanes ou de polydiarylsiloxanes avec des polyisocyanates et qui contient au moins 10% en poids de

polydialkylsiloxanes, de polydiphénylsiloxanes ou de polyalkylphénylsiloxanes.

2. Matière à mouler d'acrylonitrile/butadiène/styrène suivant la revendication 1, caractérisée en ce que le produit greffé a) est obtenu par polymérisation des monomères greffés suivants: le styrène, le styrène et l'acrylonitrile, le styrène et le méthacrylate de méthyle ou le styrène et l'acrylonitrile et le méthacrylate de méthyle, sur un caoutchouc de polybutadiène, de butadiène/acrylonitrile ou de butadiène/styrène, tandis que la résine thermoplastique est un copolymère de styrène/acrylonitrile.

3. Matière à mouler d'acrylonitrile/butadiène/styrène suivant la revendication 1, caractérisée en ce que le dérivé de silicouréthane est obtenu par réaction d'un polydiméthylsiloxane organofonctionnel comportant le motif périodique de formule:

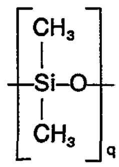

, $q = 5$–$50$

les groupes terminaux étant des groupes OH primaires et/ou secondaires et/ou des groupes amino primaires et/ou secondaires, avec des polyisocyanates.